# DEMANDE DE BREVET EUROPEEN

(11) **EP 1 439 219 A1**
(43) Date de publication de la demande: **21.07.2004**
(21) Numéro de dépôt: 04300014.0
(22) Date de dépôt: 08.01.2004
(51) Int. Cl.: C12G 1/09

(54) **Dispositif de remuage de bouteilles destiné à être utilisé dans le domaine de l'élaboration du vin selon la méthode dite champenoise**

(30) Priorité: 10.01.2003 FR 0300238
(71) Demandeur: SARL D'EXPLOITATION DES ETABLISSEMENTS ROUY ET COMPAGNIE (Société à responsabilité limitée), 08400 VOUZIERS (FR)
(72) Inventeur: Rouy, Dominique, 08400 Blaise (FR)
(74) Mandataire: Rhein, Alain

(57) **Abrégé**

L'invention concerne un dispositif de remuage de bouteilles destiné à être utilisé dans le domaine de l'élaboration du vin selon la méthode dite champenoise.

Il comporte des moyens de maintien d'une caisse-palette (5) dans laquelle sont rangées les bouteilles, des moyens (4, 40) aptes à entraîner la caisse-palette (5) dans un mouvement alternatif de pivotement selon son axe (Y) central parallèle aux axes desdites bouteilles, et des moyens permettant d'incliner progressivement pas à pas l'axe central (Y).

Il comporte un bâti support (1), sur lequel s'articule en pivotement, selon un axe horizontal (X) pour se déplacer dans un plan vertical, un levier (2) d'une extrémité duquel s'étend transversalement un bras (21) portant le moyen (4) apte à entraîner la caisse-palette (5) dans un mouvement alternatif de pivotement, tandis que son autre extrémité coopère, par un système de type vis-écrou (20), avec une tige filetée (3) apte à être entraînée en rotation axiale.

## Description

La présente invention a pour objet un dispositif de remuage de bouteilles destiné à être utilisé dans le domaine de l'élaboration du vin selon la méthode dite champenoise.

La méthode dite champenoise comprend une phase de fermentation à l'intérieur de la bouteille par l'intermédiaire de levures. Cette seconde fermentation implique toutefois la nécessité d'éliminer les levures mortes qui troublent le vin, mais pour les expulser, par l'opération dite de dégorgement, il convient préalablement de les rassembler par décantation dans le col de la bouteille à proximité du bouchon par l'opération dite de remuage.

L'opération de remuage, réalisée traditionnellement à la main, est une agitation contrôlée de la bouteille, elle consiste, par des mouvements rotatifs et des relèvements progressifs, à utiliser les éléments lourds du dépôt pour entraîner les légers et nettoyer le verre. En pratique, les bouteilles sont placées sur des pupitres permettant de poser les bouteilles tête en bas en position presque horizontale en début de remuage pour finir en position quasi verticale, à la fin du cycle, lequel dure environ trois semaines.

Cette opération fastidieuse pour l'opérateur, appelé remueur, et surtout coûteuse en espace du fait du rapport contenance/emprise d'un pupitre, est maintenant réalisée au moyen de dispositifs remueurs permettant de traiter simultanément un grand nombre de bouteilles, environ cinq cents, conditionnées dans une caisse-palette.

De tels dispositifs sont décrits dans de nombreux documents tels que par exemple FR 2.545.835, FR 2.592.661 et ES 8502726. Ils comprennent en général des moyens de maintien d'une caisse-palette dans laquelle les bouteilles sont rangées parallèlement les unes aux autres et dans le même sens, des moyens aptes à entraîner ladite caisse-palette dans un mouvement alternatif de pivotement selon son axe central parallèle aux axes desdites bouteilles, et des moyens permettant d'incliner progressivement pas à pas ledit axe central pour permettre que les lesdites bouteilles puissent passer d'une position initiale horizontale à une position finale verticale.

De manière générale, la caisse-palette est reliée aux moyens aptes à entraîner ladite caisse-palette dans un mouvement alternatif de pivotement par l'intermédiaire d'une plate-forme, qui est elle-même entraînée en pivotement et en inclinaison.

Le mouvement d'inclinaison est obtenu par basculement en extrémité d'un bras ou par roulement sur une rampe courbe concave.

Tous les dispositifs existants donnent satisfaction du point vue du travail réalisé, ils sont toutefois de conception complexe et d'un coût de fabrication relativement élevé, et sont par conséquent de diffusion limitée.

La présente invention a pour but de remédier à cet inconvénient en proposant un dispositif de remuage de bouteilles destiné à être utilisé dans le domaine de l'élaboration du vin selon la méthode dite champenoise de conception simple et peu onéreuse.

Le dispositif de remuage de bouteilles destiné à être utilisé dans le domaine de l'élaboration du vin selon la méthode dite champenoise selon l'invention est du type comportant des moyens de maintien d'une caisse-palette dans laquelle les bouteilles sont rangées parallèlement les unes aux autres et dans le même sens, des moyens aptes à entraîner ladite caisse-palette dans un mouvement alternatif de pivotement selon son axe central parallèle aux axes desdites bouteilles, et des moyens permettant d'incliner progressivement pas à pas ledit axe central pour permettre que lesdites bouteilles puissent passer d'une position initiale horizontale à une position finale verticale, et il se caractérise essentiellement en ce qu'il comporte un bâti support, sur lequel s'articule en pivotement, selon un axe horizontal pour se déplacer dans un plan vertical, un levier d'une extrémité duquel s'étend transversalement un bras portant le moyen apte à entraîner ladite caisse-palette dans un mouvement alternatif de pivotement selon son axe central parallèle aux axes desdites bouteilles, tandis que son autre extrémité coopère, par un système de type vis-écrou, avec une tige filetée s'étendant dans ledit plan et apte à être entraînée en rotation axiale en sorte de déplacer ledit levier dans la position angulaire désirée.

Selon une caractéristique additionnelle du dispositif selon l'invention, le moyen apte à entraîner ladite caisse-palette dans un mouvement alternatif de pivotement selon son axe central parallèle aux axes desdites bouteilles, consiste en un motoréducteur.

Selon une autre caractéristique additionnelle du dispositif selon l'invention, le levier comporte, symétriquement par rapport au bras qui porte la caisse-palette, un second bras portant une seconde caisse-palette.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé :
- la figure 1 représente une vue schématique partielle en perspective du dispositif de remuage selon l'invention.
- la figure 2 représente une vue schématique partielle en perspective sous un autre angle du même dispositif.

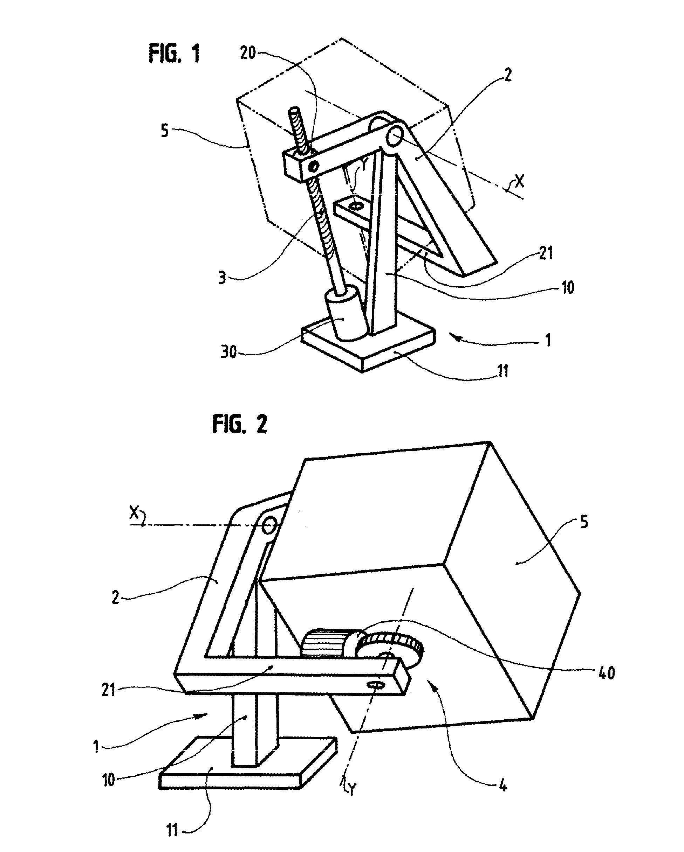

En référence à la figure 1 on peut voir qu'un dispositif de remuage selon l'invention comprend un bâti support 1 représenté schématiquement par un mât 10 et une embase 11, sachant qu'il peut, notamment l'embase 11, présenter une architecture différente.

L'extrémité libre du mât 10 porte, par l'intermédiaire d'un pivot 12 d'axe X horizontal, un levier 2.

L'une des extrémités du levier 2 est équipée d'un système vis-écrou comprenant une pièce taraudée 20 articulée sur le levier selon un axe parallèle à l'axe X, et dans laquelle est vissée une tige filetée 3 apte à être entraînée en rotation axiale par une motorisation 30 solidaire du bâti 1.

Par la rotation de la tige filetée 3, à la manière d'un vérin mécanique, il est possible de faire pivoter sur le mât 10 le levier 2 de l'angle désiré, et cela avec une grande précision selon la motorisation 30 utilisée.

L'autre extrémité du levier 2, présente un bras 21 s'étendant perpendiculairement et horizontalement, c'est-à-dire parallèlement à l'axe X.

On notera que de manière avantageuse, afin de réduire les dimensions de l'ensemble du dispositif selon l'invention, le levier 2 n'est pas rectiligne mais coudé au niveau de son articulation sur le mât 10.

En référence maintenant à la figure 2, on peut voir le bâti 1 avec son mât 10 et son embase 11, ainsi que le levier 2 et son bras 21. Ce dernier présente à proximité de son extrémité, un moyen de fixation 4 d'une caisse-palette 5, qui est apte à autoriser le pivotement de celle-ci dans un mouvement de pivotement selon un axe central Y, en l'occurrence perpendiculaire à l'axe X.

On notera qu'il est prévu de ranger les bouteilles, non représentées, chacune selon un axe parallèle à l'axe Y.

Ce moyen de fixation 4 incorpore une motorisation 40 qui est apte à entraîner la caisse-palette 5 dans un mouvement alternatif de pivotement selon l'axe Y.

Le dispositif de remueur selon l'invention est d'une conception simple et peu onéreuse, par rapport aux dispositifs existants, tout en étant d'une efficacité au moins égale.

Le système vis-écrou est d'une grande simplicité de fabrication tout en étant d'une grande précision de réglage angulaire.

En ce qui concerne le mouvement alternatif de pivotement de la caisse-palette 5, celui-ci est assuré de manière indépendante.

On notera qu'il est possible, dans un but de rationalisation et d'équilibrage, de concevoir un dispositif comprenant un second bras s'étendant symétriquement au bras 21 par rapport au levier 2, et destiné à l'assujettissement d'une seconde caisse-palette 5. Dans ce cas, le second bras comporte sa propre motorisation, éventuellement asservie à celle du premier bras en vue d'harmoniser leur fonctionnement et atteindre un équilibre.

## Revendications

1. Dispositif de remuage de bouteilles destiné à être utilisé dans le domaine de l'élaboration du vin selon la méthode dite champenoise, du type comportant des moyens de maintien d'une caisse-palette (5) dans laquelle les bouteilles sont rangées parallèlement les unes aux autres et dans le même sens, des moyens (4, 40) aptes à entraîner ladite caisse-palette (5) dans un mouvement alternatif de pivotement selon son axe (Y) central parallèle aux axes desdites bouteilles, et des moyens permettant d'incliner progressivement pas à pas ledit axe central (Y) pour permettre que lesdites bouteilles puissent passer d'une position initiale horizontale à une position finale verticale, **caractérisé en ce qu'**il comporte un bâti support (1), sur lequel s'articule en pivotement, selon un axe horizontal (X) pour se déplacer dans un plan vertical, un levier (2) d'une extrémité duquel s'étend transversalement un bras (21) portant le moyen (4) apte à entraîner ladite caisse-palette (5) dans un mouvement alternatif de pivotement selon son axe central (Y) parallèle aux axes desdites bouteilles, tandis que son autre extrémité coopère, par un système de type vis-écrou (20), avec une tige filetée (3) s'étendant dans ledit plan et apte à être entraînée en rotation axiale en sorte de déplacer ledit levier (2) dans la position angulaire désirée.

2. Dispositif selon la revendication 1, **caractérisé en ce que** le moyen apte à entraîner ladite caisse-palette dans un mouvement alternatif de pivotement selon son axe central (Y) parallèle aux axes desdites bouteilles, consiste en un motoréducteur (40).

3. Dispositif selon la revendication 1 ou la revendication 2, **caractérisé en ce que** le levier (2) comporte, symétriquement par rapport au bras (21) qui porte la caisse-palette (5), un second bras portant une seconde caisse-palette (5).

4. Dispositif selon l'une quelconque des revendications précédentes, **caractérisé en ce que** le levier (2) est coudé au niveau de son articulation sur le bâti-support (1, 10).
